# EUROPÄISCHE PATENTSCHRIFT

(11) **EP 1 448 421 B1**
(45) Veröffentlichungstag und Bekanntmachung des Hinweises auf die Patenterteilung: **15.08.2007**
(21) Anmeldenummer: 02803799.2
(22) Anmeldetag: 27.11.2002
(51) Int. Cl.: B60T 13/74, B60T 13/66, B60T 13/08, B60D 1/62

(54) **ELEKTRISCHE BREMSEINRICHTUNG FÜR FAHRZEUGANHÄNGER UND VERFAHREN ZU DEREN BETÄTIGUNG**
ELECTRICAL BRAKING DEVICE FOR VEHICLE TRAILERS AND METHOD FOR OPERATION THEREOF
DISPOSITIF DE FREINAGE ELECTRIQUE DESTINE A DES REMORQUES ET PROCEDE D'UTILISATION

(30) Priorität: 29.11.2001 DE 20119469 U
(43) Veröffentlichungstag der Anmeldung: 25.08.2004
(73) Patentinhaber: AL-KO KOBER AG, D-89359 Kötz (DE)
(72) Erfinder: KÖHLER, Robert, 86480 Waltenhausen (DE); KOBER, Kurt, 89359 Kleinkötz (DE)
(74) Vertreter: Ernicke, Klaus Stefan
(86) Internationale Anmeldenummer: PCT/EP2002/013349
(87) Internationale Veröffentlichungsnummer: WO 2003/045755

(56) Entgegenhaltungen:
- WO-A-01/14188
- DE-A- 10 046 130
- US-A- 3 897 979
- US-A- 3 981 542

## Beschreibung

Die Erfindung betrifft eine elektrische Bremseinrichtung für Fahrzeuganhänger und ein Verfahren zu deren Betätigung mit den Merkmalen im Oberbegriff des Verfahrens- und Vorrichtungshauptanspruchs.

Eine derartige elektrische gattungsgemäße Bremseinrichtung für Fahrzeuganhänger ist aus der US-A-3, 897, 979 bekannt. Sie besteht aus elektrischen Radbremsen mit einer an das Zugfahrzeug anschließbaren Stromversorgung und einer Messeinrichtung mit einer Steuerung zur Ermittlung der benötigten Bremskräfte. Sie ist in einer Schalt- und Steuerbox untergebracht, die auf einer konventionellen Zugdeichsel montiert ist. Die Messeinrichtung ist als Trägheits- oder Pendelmesser ausgebildet, der die Verzögerungen beim Bremsen aufnimmt und an die Steuerung signalisiert. In der Schalt- und Steuerbox ist hierfür eine einseitig eingespannte und am anderen Ende mit einem Gewicht versehene Blattfeder angeordnet, die trägheitsbedingt auf Längs- und Querbeschleunigungen reagiert, welche auf den Anhänger einwirken. Hierbei wird die Feder entsprechend verformt. An der Feder sind beidseits Dehnungsmessstreifen angebracht, mit denen die trägheitsbedingte Federverformung gemessen wird. Die Steuerung betätigt ihrerseits über Steuerleitungen die elektrischen Radbremsen. Die Radbremsen bestehen aus Bremsbacken oder anderen Bremselementen, die mittels eines elektrischen Stellantriebs betätigt und gelüftet werden.

Aus der DE-A-20 24 406 ist eine elektrische Bremseinrichtung für Fahrzeuganhänger mit einer Deichselanordnung und einer Anhängerkupplung bekannt, wobei die Bremseinrichtung eine an das Zugfahrzeug anschließbare Stromversorgung, elektrische Radbremsen und eine Messeinrichtung sowie eine Steuerung zur Ermittlung der benötigten Bremskräfte aufweist. Die Deichselanordnung ist zumindest begrenzt beweglich, wobei sich die Zugstange verschieben kann, wenn sich die Relativgeschwindigkeit von Zugfahrzeug und Anhänger ändert. Die Zugstange drückt hierbei auf einen Geber, der die Druck- oder Zugbeanspruchung abtastet und an die Steuerung meldet. Bei **der gezeigten Reihenanordnung von Zugstange und Geber** können nur Druckkräfte aufgenommen werden, wobei der Geber als Druckmesser ausgebildet ist. Bei der Aufnahme von Zugkräften ist der Geber auf der Zugstange angeordnet und wird von dieser gegen einen Anschlag oder dergleichen gedrückt.

Die DE-A-35 24 932 befasst sich mit einer Bremsanordnung für Lkw-Züge, bei denen die Anhänger mit einer 2-Leitungs-Druckluftbremsanlage ausgerüstet sind. Hier soll über eine automatische Zugabstimmung die Bremskraft abhängig vom Beladezustand des Anhängers und der auftretenden Deichselkraft zusätzlich beeinflusst werden. Die Bremsung wird in üblicher Weise vom Fahrer über die Druckluftleitung zum Anhänger ausgelöst. Für die Annahme der Deichselkräfte sollen Dehnungsmessstreifen in einer nicht näher genannten Anordnung und Ausbildung verwendet werden. Die WO 01/14188 befasst sich mit einer am Zugfahrzeug und dem dortigen Zughaken angebrachten Messeinrichtung zur Ermittlung der am Zughaken auftretenden und vom Anhänger verursachten Kräfte. Dies betrifft die Wank- und Schleuderbewegungen des Anhängers und die hierdurch hervorgerufenen Querkräfte. In Abhängigkeit von den Messdaten soll das Bremsverhalten des Anhängers unabhängig von den Fahrzeugbremsen durch den Fahrer beeinflusst werden können. Die Messung findet auf der Zugfahrzeugseite statt, wobei der Fahrer Eingriffsmöglichkeiten zur Betätigung der Anhängerbremsen hat.

Es ist Aufgabe der vorliegenden Erfindung, eine bessere elektrische Bremstechnik für Fahrzeuganhänger aufzuzeigen.

Die Erfindung löst diese Aufgabe mit den Merkmalen im Verfahrens- und Vorrichtungshauptanspruch. Die erfindungsgemäße elektrische Bremseinrichtung für auflaufgebremste Anhänger hat den Vorteil, dass sie die beim Bremsen und erneuten Beschleunigen des Gespannes auftretenden Kräfte besser und genauer ermitteln kann als die vorbekannte Pendel- oder Trägheitsmessung. Die Kraftmessanordnung kann auch schneller reagieren, so dass die Bremsen früher und genauer ansprechen. Die Kräfte können in beliebig geeigneter Weise unmittelbar oder **mittelbar, z.B. über Dehnungen gemessen werden. In der** bevorzugten Ausführungsform besteht die Kraftmessanordnung aus mehreren elektrischen Dehnungsmessstreifen und kann die auftretenden Kräfte bewegungsfrei aufnehmen. Hierzu ist auch eine vorzugsweise vollkommen starre Deichselanordnung vorgesehen. Der Ausschluss von beweglichen Teilen, wie Schiebeelementen oder dergleichen im Deichsel- und Messbereich schließt verfälschende Einflüsse durch Massenträgheit, Reibungswiderstände, Korrosionserscheinungen und dergleichen aus. Mit den elektrischen Dehnungsmessstreifen können vielmehr die in der Deichselanordnung direkt auftretenden axialen Zug- und Druckkräfte in Form von Dehnungen oder Spannungen direkt aufgenommen werden, was eine maximale Messgenauigkeit bietet.

Vorteilhaft sind ferner die Verschleißarmut und die durch niedrige Bau- und Unterhaltskosten gegebene Wirtschaftlichkeit.

Für die Erhöhung der Messgenauigkeit empfiehlt es sich, die Dehnungsmessstreifen an einem starren und vorzugsweise massivwandigen Rohrstück anzuordnen. Sie sind dabei an zwei gegenüberliegenden Längsseiten angeordnet und befinden sich vorzugsweise im Bereich der neutralen Phase des Rohrstücks, in der die neutrale Biegelinie mit Bezug auf Vertikalkräfte verläuft. Auf diese Weise können Einflüsse von Biegespannungen bei der Messung weitgehend eliminiert werden. Die massive und durchbruchsfreie Wandung wirkt sich ebenfalls positiv auf die Messergebnisse aus.

Das Rohrstück ist am vorderen Ende starr mit der Anhängerkupplung verbunden und vorzugsweise einteilig an das Kupplungsgehäuse angeformt. Am anderen Ende ist das Rohrstück mit der Deichselanordnung starr verbunden. Eine Klemm- und Schraubverbindung in diesem Bereich hat den Vorteil, dass sie auch bei Wechselbelastungen dauerhaft fest ist und außerdem keine Störeinflüsse auf die Kraftmessung ausübt. Zu diesem Zweck ist es auch günstig, wenn die Dehnungsmessstreifen etwa in der axialen Mitte zwischen dem vorderen Kupplungsgehäuse und der rückwärtigen Befestigungsstelle angeordnet sind und einen ausreichenden Abstand zu den Befestigungsstellen haben.

Die Steuerung ist vorzugsweise als hochintegrierte und klein bauende Steuerung ausgebildet, die platzsparend und geschützt im Inneren des Rohrstücks untergebracht werden kann. Hierdurch können auch die Leitungsverbindungen zwischen den elektrischen Dehnungsmessstreifen und der Steuerung kurz gehalten werden. Durch das Rohrstück lassen sich auch das vordere Anschlusskabel für die Stromversorgung und die rückwärtigen Steuerleitungen zu den elektrischen Radbremsen geschützt unterbringen und verlegen. Die Steuerleitungen können aus dem gleichen Grund auch im Innenraum der Längsholme des Fahrgestells bis zu den Radbremsen weitergeführt sein.

Die Stromversorgung und das Anschlusskabel sind an die Anhänger-Steckdose des Zugfahrzeugs anschließbar. Sie werden über den Dauerplus-Kontakt mit Energie zum Betrieb der Steuerung, der Kraftmessanordnung und der elektrischen Radbremsen versorgt. Ober den Anschluss an den Bremslichtkontakt des Zugfahrzeugs ist außerdem ein Ein- und Ausschalten der Anhänger-Bremsfunktion in Abhängigkeit von der Betätigung des Bremspedals im Zugfahrzeug möglich. Darüber hinaus kann eine Vorbremsung realisiert werden,
wobei die Anhängerbremsen bereits bei einer leichten Betätigung des Bremspedals im Zugfahrzeug über einen entsprechenden Vorgabewert aus der Steuerung betätigt werden, bevor an der Kraftmessanordnung eine Auflaufkraft des Anhängers messbar ist. Durch diese vorzugsweise auf das jeweilige Anhängergewicht einstellbare Vorbremsung können außerdem ein Schlingern oder Schleudern des Anhängers sowie ein Wanken abgebaut werden.

Die elektrische Bremseinrichtung lässt sich im Wege der Erstausrüstung in neue Fahrzeuganhänger integrieren und kann mit diesen auch eine Baueinheit bilden. Die Erfindung umfasst daher auch Fahrzeuganhänger mit einer integrierten elektrischen Bremseinrichtung. Die Erfindung zeigt ferner einen Bremskopf, der als Anbauteil für beliebige Deichselanordnungen ausgebildet ist und der eine Nachrüstung oder Umrüstung bestehender elektrischer Bremseinrichtungen oder anderer Bremseinrichtungen ermöglicht. Hierbei können unter Weiterverwertung der elektrischen Radbremsen und der Steuerleitungen der Pendelmesser und die Steuerung der bekannten amerikanischen Ausführungsform durch den Bremskopf ersetzt werden. Der Bremskopf kann außerdem als autarke Baueinheit, die ggf. noch mit elektrischen Radbremsen ergänzt ist, an Hersteller von Fahrzeuganhängern geliefert und dort mit beliebigen Fahrgestellen kombiniert werden. Hierbei empfiehlt sich eine Vorkalibrierung, um den Einbau weiter zu vereinfachen.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: ein Gespann aus Zugfahrzeug und Fahrzeuganhänger mit einer elektrischen Bremseinrichtung für den Anhänger in abgebrochener Seitenansicht,
- Figur 2:: einen Bremskopf mit einer Anhängerkupplung und einem angeformten Rohrstück mit integrierter Steuerung und einer Kraftmessanordnung in teilweiser abgebrochener Seitenansicht,
- Figur 3:: eine Draufsicht des Bremskopfes gemäß Pfeil III von Figur 2,
- Figur 4:: eine Komplettierung des Bremskopfes mit einem Montagebeschlag und einer Befestigungseinrichtung zur Verbindung mit einer Deichselanordnung des Fahrzeuganhängers in abgebrochener Seitenansicht,
- Figur 5:: einen Querschnitt durch den Bremskopf gemäß Schnittlinie V-V von Figur 4,
- Figur 6:: eine Draufsicht auf den Bremskopf gemäß Pfeil VI von Figur 4,
- Figur 7 bis 9:: ein Klemmteil des Bremskopfes in Seitenansicht, Draufsicht und Stirnansicht und
- Figur 10 und 11:: zwei Geometrievarianten des Rohrstücks und der Befestigungseinrichtung im Querschnitt.

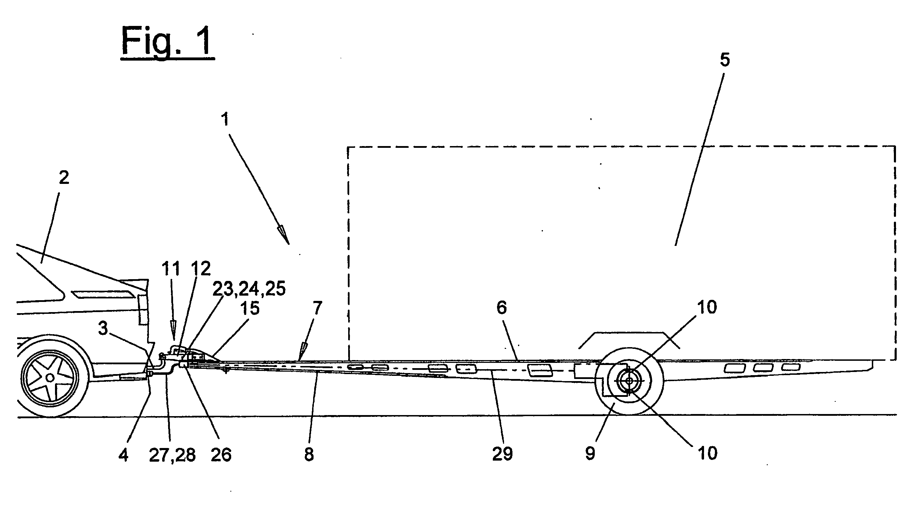

Figur 1 zeigt in einer abgebrochenen Seitenansicht ein Zugfahrzeug (2) und einen angekuppelten und in Abhängigkeit von den Auflaufkräften gebremsten Fahrzeuganhänger (5). Das Zugfahrzeug (2) ist vorzugsweise ein PKW oder Leichtlastwagen und besitzt eine geeignete Zugeinrichtung, z.B. einen Zughaken oder sogenannten Kugelhals (3), der am Ende eine Kupplungskugel aufweist. Am Zugfahrzeug (2) ist außerdem im Heckbereich eine elektrische mehrpolige Steckdose (4) angeordnet, an der über verschiedene Kontakte eine Stromleitung mit Dauerplus, ein Bremslichtsignal für die Bremsbetätigung des Zugfahrzeugs (2) und andere für die Anhängerbeleuchtung erforderliche Spannungen und Signalströme bereit gestellt werden.

Der Fahrzeuganhänger (5) besitzt ein Fahrgestell (6) von beliebiger Bauart, das mit einer starren Deichselanordnung (7) ausgerüstet ist. Das Fahrgestell (6) trägt einen beliebigen Aufbau und hat ein oder mehrere Achsen mit Rädern (9). Die Deichselanordnung (7) umfasst im gezeigten Ausführungsbeispiel eine V-Zugdeichsel mit zwei nach vorn spitz zusammenlaufenden und miteinander verbundenen Deichselholmen (8). Diese können einteilig in die Längsträger des Fahrgestells (6) übergehen oder mit diesen starr verbunden sein. Alternativ kann auch eine andere Deichselform , z.B. eine Einrohrdeichsel mit einem entsprechenden Anschluss an das Fahrgestell (6) vorhanden sein. Ferner kann die Deichselanordnung (7) eine Anhängerkupplung (12) beinhalten.

Der Fahrzeuganhänger (5) besitzt eine elektrische Bremseinrichtung (1), die vom Zugfahrzeug (2) über ein Anschlusskabel (28) und eine Stromversorgung (27) mit elektrischer Energie versorgt wird. Die elektrische Bremseinrichtung (1) umfasst an jedem Rad (9) ein oder mehrere elektrische Radbremsen (10), die von beliebig geeigneter Bauart sein können. Z.B. kann es sich um Trommelbremsen, Scheibenbremsen oder sonstige beliebig geeignete Bremssysteme handeln, die mit einer beliebig geeigneten elektrischen Stelleinrichtung ausgerüstet sind. Die Stelleinrichtung kann z.B. aus Elektromagneten mit federbelasteten Stellhebeln, aus elektrischen Spindelmotoren oder aus beliebigen anderen elektrischen, elektromagnetischen oder dergleichen Aktoren bestehen.

Die elektrischen Radbremsen (10) sind über jeweils eine Steuerleitung (29) mit einer Steuerung (26) der elektrischen Bremseinrichtung (1) und mit der Stromversorgung (27) verbunden.

Die Deichselholme (8) tragen am vorderen Ende die Anhängerkupplung (12), die mit den Holmen starr verbunden ist. Die Anhängerkupplung (12) besitzt ein Kupplungsgehäuse (13) mit einer Kupplungsmechanik (14), die z.B. mit dem Kugelkopf des Zughakens (3) zusammenwirken. Außerdem kann im Bereich der Anhängerkupplung (12) eine Handbremseinrichtung (15) vorhanden sein. Diese kann als rein mechanische Zusatzbremse mit Seilzug und mechanisch betätigbaren Bremsbacken an den Radbremsen ausgerüstet sein. Sie kann alternativ auch an die elektrische Bremseinrichtung (1) angeschlossen sein, wobei durch Batterien, Selbstverriegelungseinrichtungen oder dergleichen auch eine Funktion im abgekuppelten Zustand und ohne Stromversorgung vom Zugfahrzeug (2) möglich ist.

Die elektrische Bremseinrichtung (1) wird durch die beim Bremsen des Zugfahrzeugs (2) am Fahrzeuganhänger (5) trägheitsbedingt auftretenden Auflaufkräfte betätigt. Sie besitzt zur Ermittlung der Auflaufkräfte oder Bremskräfte und zur entsprechenden Betätigung der elektrischen Radbremsen (10) eine an der starren Deichselanordnung (7) vorzugsweise außenseitig, alternativ oder zusätzlich aber auch innenseitig montierbare Kraftmessanordnung (23), welche die in der Deichselanordnung (7) wirkenden axialen Zug- und Druckkräfte vorzugsweise bewegungsfrei als Stauchungen oder Dehnungen aufnimmt. Hierbei werden bewegliche Teile im Bereich der Kraftmessanordnung (23) vorzugsweise vermieden.

Die Kraftmessanordnung (23) besitzt im gezeigten Ausführungsbeispiel mehrere elektrische Dehnungsmessstreifen (24,25), die an beiden längslaufenden Seitenwänden eines Rohrstücks (16) angeordnet sind. Das Rohrstück (16) ist starr ausgebildet und hat eine dünne Wandung. Die Rohrwand ist zur Vermeidung von Störeinflüssen vorzugsweise im Bereich der Messanordnung massiv, das heißt ohne Durchbrüche, Schwächungen oder dgl. ausgebildet.

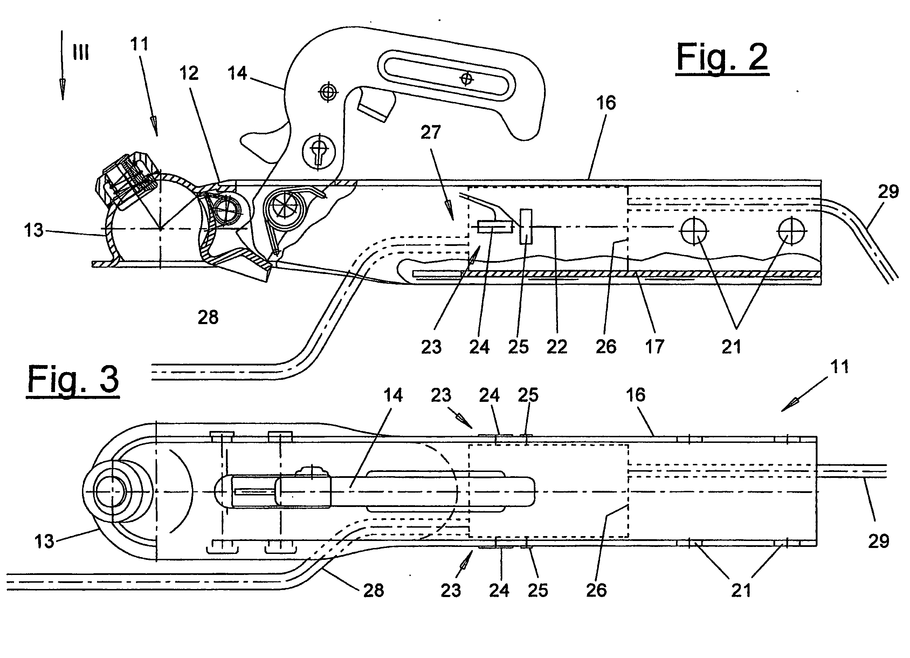

Wie Figur 2 verdeutlicht, sind vorzugsweise beidseits an diametral gegenüberliegenden Stellen außen am Rohrstück (16) jeweils zwei elektrische Dehnungsmessstreifen (24,25) in Längs- und Querausrichtung angeordnet. Die Dehnungsmessstreifen (24,25) befinden sich hierbei im Bereich der neutralen Phase (22) des Rohrstücks (16). Dies ist der Bereich der neutralen Biegelinie bei Einwirkung von Vertikalkräften auf die Deichselanordnung (7) bzw. das Rohrstück (16) und wird auch als neutrale Faser bezeichnet. In dieser neutralen Phase (22) werden Biegespannungen zumindest weitgehend vermieden, so dass die Dehnungsmessstreifen (24,25) vor allem die am Applikationsort auftretenden und längs der Rohrachse gerichteten axialen Zug- und Druckkräfte im Rohrstück (16) mittelbar über Dehnungen bzw. Stauchungen messen. Bei dem zentral angeordneten Rohrstück (16) sind die gemessenen Zug- und Druckkräfte längs der mittigen Anhängerlängsachse gerichtet.

Bei der alternativen Anordnung der Dehnungsmessstreifen (24,25) an einer anderen Stelle der starren Deichselanordnung (7), z.B. den Deichselholmen, werden die dort auftretenden und längs der Holme gerichteten axialen Zug- und Druckkräfte ermittelt. Bei allen Ausführungen können ggf. auch die vertikalen Querkräfte gemessen bzw. ermittelt werden.

Die Dehnungsmessstreifen (24,25) sind z.B. in einer Wheatstoneschen-Brückenschaltung zusammengeschaltet und temperaturkompensiert. Durch eine geeignete Messstreifenausrichtung und eine entsprechende Brückenschaltung werden auch Quer- und Stützkräfte oder andere unerwünschte Einflüsse kompensiert. Die Dehnungsmessstreifen (24,25) bzw. deren Brückenschaltung sind mit der Steuerung (26) durch in Figur 2 angedeutete Leitungen verbunden.

Das vorzugsweise gerade Rohrstück (16) ist am vorderen Ende starr mit der Anhängerkupplung (12) verbunden. In der bevorzugten Ausführungsform ist das Rohrstück (16) einstückig an das nach unten offene Kupplungsgehäuse (13) der Anhängerkupplung (12) angeformt. Hierbei ist beispielsweise das im Querschnitt U-förmige Kupplungsgehäuse (13) nach hinten unter Bildung des Rohrstücks (16) verlängert, wobei mit Abstand hinter der Kupplungsmechanik (14) ein Bodenteil (17) eingezogen und durch Schweißen oder dergleichen zur Bildung der geschlossenen Rohrwandung befestigt ist. Das Bodenteil (17) kann am vorderen Rand einen gerundeten Ausschnitt aufweisen. Die Anhängerkupplung (12) und das Rohrstück (16) bestehen vorzugsweise aus Metall und können als Stanz- und Biegeteil aus Stahlblech oder als Gussteil ausgebildet sein.

Am rückwärtigen Ende ist das Rohrstück (16) mittels einer Befestigungseinrichtung (19) mit den Deichselholmen (8) starr verbunden. Damit besteht eine durchgehend starre Verbindung von der Anhängerkupplung (12) über das Rohrstück (16) und die Befestigungseinrichtung (19) mit den Deichselholmen (8) und dem gesamten Fahrgestell (6).

Die Befestigungseinrichtung (19) besitzt eine Klemm- und Schraubverbindung (21). Diese besteht aus einem das Rohrstück (16) im hinteren Bereich außenseitig umgreifenden Klemmteil (20), welches bodenseitig an einen vorzugsweise metallischen Montagebeschlag (18), z.B. eine Deichselplatte, durch Schweißen oder dergleichen befestigt ist. Das Klemmteil (20) besteht aus Metall und hat im Querschnitt eine nach unten offene bügelartige U-Form. Im vorderen Bereich ist das Klemmteil (20) trichterförmig aufgeweitet, wodurch z.B. ein überdeckter und geschützter Montageraum für die Dehnungsmesstreifen (24,25) gebildet werden kann.

Durch diese Formgestaltung bildet das Klemmteil (20) mit dem Montagebeschlag (18) ein Aufnahmerohr für den dichten Umgriff und einen Klemmschluss mit dem rückwärtigen Ende des Rohrstücks (16). In diesem Klemmbereich haben die Seitenwände des Rohrstücks (16) und des Klemmteils (20) fluchtende Durchgangsbohrungen für vorzugsweise quer liegende Schraubverbindungen oder andere geeignete Formschlussverbindungen, z.B. Niete oder dergleichen. Die Durchgangsbohrungen befinden sich ebenfalls vorzugsweise im Bereich der neutralen Phase (22).

Die Kraftmessanordnung (23), insbesondere in Form der elektrischen Dehnungsmessstreifen (24,25), ist an der Deichselanordnung (7) in Längsrichtung an einem geeigneten Ort positioniert, wo vorzugsweise möglichst alle durch Geschwindigkeitsunterschiede zwischen Zugfahrzeug (2) und Fahrzeuganhänger (5) und insbesondere durch die Massenträgheit des Fahrzeuganhängers (5) bedingten Auflaufkräfte und Rückhaltekräfte direkt oder mittelbar gemessen werden können. Vorzugsweise liegt dieser Applikationsort zwischen dem Ankuppelpunkt der Anhängerkupplung (12) am Zughaken (3) und dem Massenschwerpunkt des Fahrzeuganhängers (5), insbesondere dem Ankuppelpunkt und der nächstgelegenen Befestigungsstelle des Anhängeraufbaus am Fahrgestell (6), um einen möglichst großen Anteil der Massenkräfte erfassen zu können.

Im gezeigten Ausführungsbeispiel sind die Dehnungsmessstreifen (24,25) axial vorzugsweise im mittleren Bereich zwischen den Anhängerkupplung (12) und deren Kupplungsmechanik (14) und dem Klemmteil (20) am Rohrstück (16) angeordnet. Sie sind z.B. auf Höhe oder mit Abstand hinter dem Vorderrand des Bodenteils (17) angeordnet. Hierdurch sind sie entlastet von Störeinflüssen seitens der Schraubverbindungen (21) und der Anhängerkupplung (12).

Der Montagebeschlag (18) bzw. die Deichselplatte ist mit den Deichselholmen (8) durch Schrauben oder dergleichen verbunden. Hierbei liegt die Deichselplatte (18) vorzugsweise auf der Oberfläche der abgekanteten Obergurte der im Querschnitt C-förmigen Deichselholme (8) auf und ist hier verschraubt. Die Deichselplatte (18) hat hierbei eine an die Deichselform angepasste Gestalt. Im Bereich des Klemmteils (20) kann die Deichselplatte (18) außerdem einen hochstehenden Höcker (30) haben, der eine seitliche Führung für das Rohrstück (16) und auch für das Klemmstück (20) bei der Befestigung bietet.

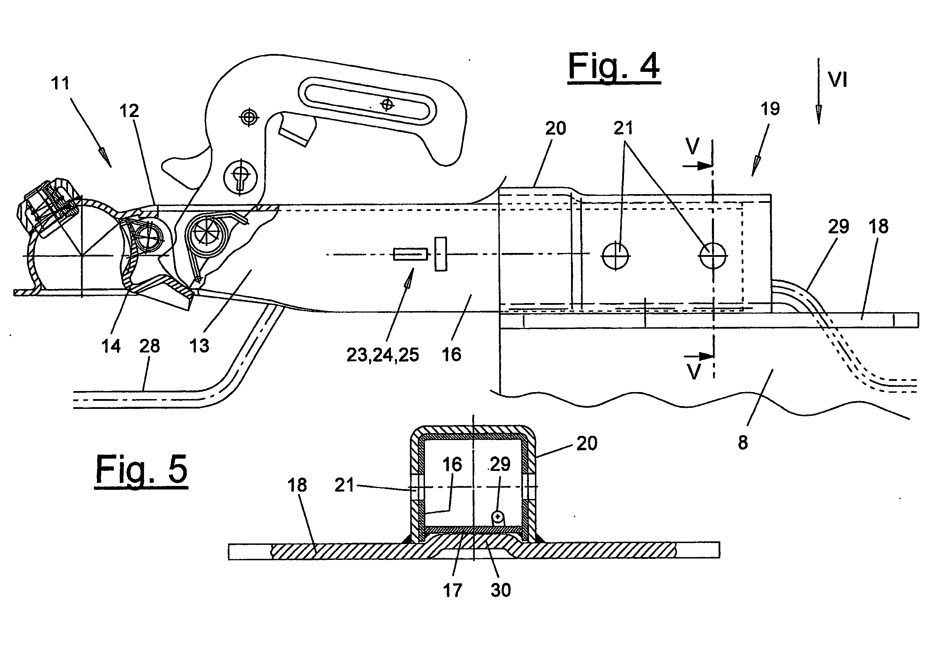

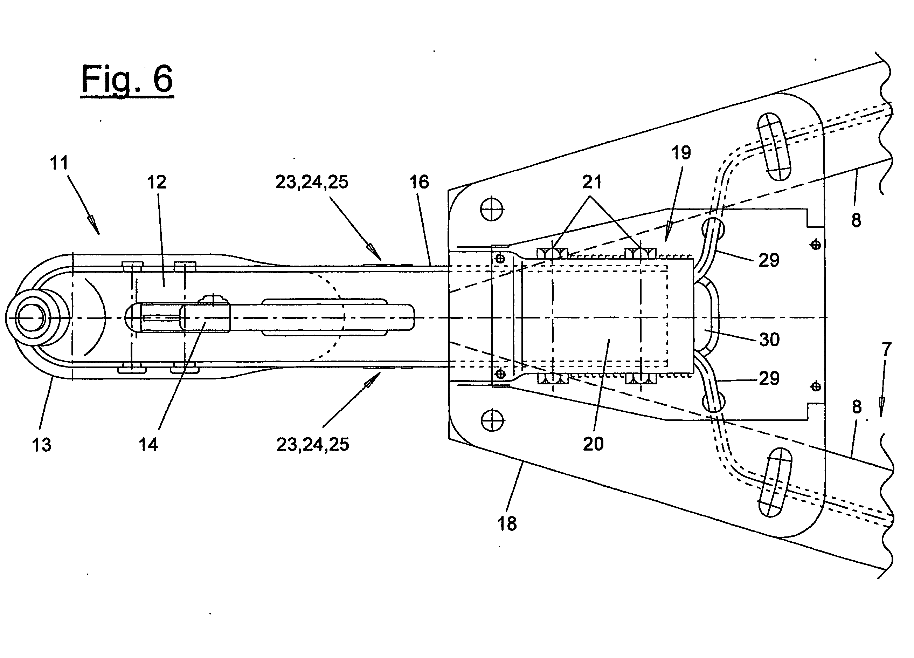

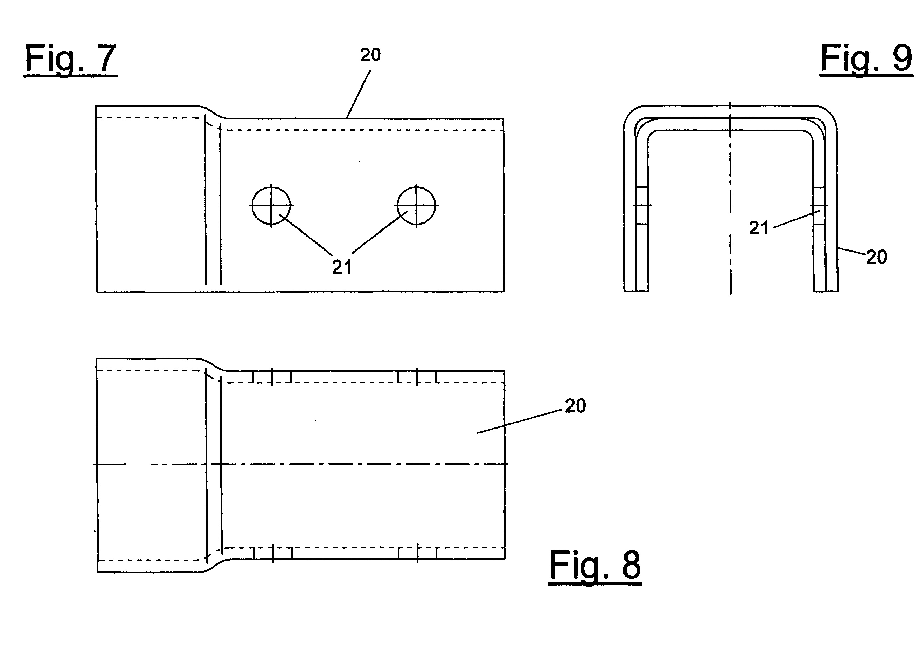

Das Rohrstück (16) und das Klemmteil (20) können einen beliebig geeigneten Querschnitt haben. Im Ausführungsbeispiel von Figur 1 bis 9 haben beide einen im Wesentlichen rechteckigen Querschnitt. Hierbei stehen die Seitenwände des Rohrstücks (16) und das eingezogene Bodenteil (17) ein kleines Stück nach unten vor und sind hier an den seitlichen Flanken des Höckers (30) geführt.

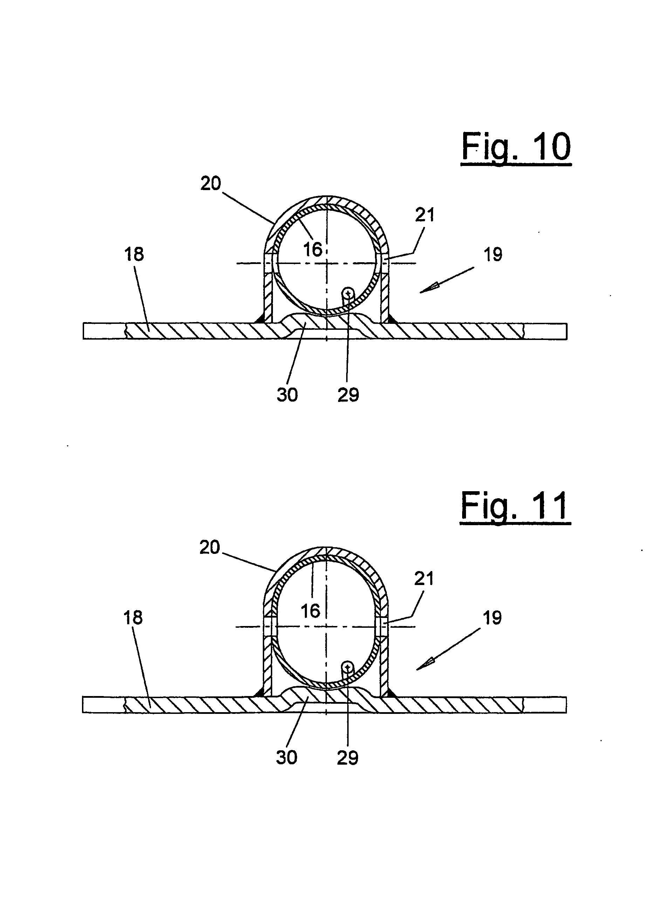

Figur 10 und 11 zeigen hierzu eine Variante, wobei in Figur 10 das Rohrstück (16) als Zylinderrohr mit kreisrundem Querschnitt ausgebildet ist. Das Klemmteil (20) ist als abgerundeter Bügel ausgebildet, der im oberen Bereich eine das Rohrstück (16) dicht umgreifende Wölbung und im unteren Bereich anschließende Vertikalwände hat. Der Höcker (30) kann hierbei mittig eine Längsrinne zur Führung des runden Rohrstücks (16) aufweisen. Die Durchgangsbohrungen bzw. die Schraubverbindung (21) befinden sich zumindest teilweise im Rundungsbereich.

In der Variante von Figur 11 ist ein im Querschnitt ovales Rohrstück (16) mit einem entsprechend angepassten Klemmteil (20) dargestellt. Das ovale Rohrstück (16) besitzt im mittleren Bereich gerade vertikale Wandabschnitte, in denen die Durchgangslöcher bzw. Schraubverbindungen (21) angeordnet sind. Ansonsten kann das Rohrstück (16) auch im Querschnitt eine elliptische Form, eine prismatische Form oder eine sonstige beliebige Gestaltung haben.

Die Steuerung (26) ist als hochintegrierte Steuerung ausgebildet, die mit der vorhandenen Speisespannung des Fahrzeugs (2), z.B. 12, 24 oder 42 Volt, gegebenenfalls umschaltbar arbeitet. Die Steuerung (26) kann aus Gründen der Ausfallsicherheit auch einen integrierten Energiespeicher, z.B. eine Batterie haben, mit der temporäre Aussetzer in der Stromversorgung überbrückt werden können. Die Steuerung (26) kann hierbei auch eine Überwachungsschaltung zur Kontrolle der Stromversorgung und zur Rückmeldung von evtl. Störungszuständen an das Zugfahrzeug (2) besitzen. Die Steuerung (26) kann an beliebiger Stelle des Fahrzeuganhängers (5) angeordnet sein. Vorzugsweise baut die Steuerung (26) so klein, dass sie im Innenraum des Rohrstücks (16) oder im Deichselholm (8) Platz findet.

Die Steuerung (26) ist über das Anschlusskabel (28) an die Steckdose (4) des Zugfahrzeugs (2) anschließbar. Das Anschlusskabel (28) kann hierbei als Kombikabel ausgebildet sein und auch die für die Anhängerbeleuchtung erforderlichen Leitungen beinhalten (nicht dargestellt), die ggf. an die Steuerung (26) angeschlossen sind und von dieser dann weiter zu den Beleuchtungseinrichtungen des Fahrzeuganhängers (5), z.B. Bremslicht, Nebelscheinwerfer, Rücklicht, Kennzeichenbeleuchtung, Blinker, zusätzliche Konturenleuchten, etc. geführt sind. Die Steuerung (26) ist zum Zwecke der elektrischen Bremseinrichtung (1) über eine Leitung mit dem Dauerplus-Pol und mit dem Bremslicht-Pol der Steckdose (4) des Zugfahrzeugs (2) verbunden.

Die Steuerung (26) ist als frei programmiere sowie rechnergestützte Steuerung mit ein oder mehreren Mikroprozessoren, Datenspeichern, sowie I/O-Schnittstellen ausgerüstet. Sie beinhaltet eine Vergleichs- und Auswerteschaltung und eine Steuerschaltung zur Betätigung der elektrischen Radbremsen (10). Die von den angeschlossenen elektrischen Dehnungsmessstreifen (24,25) kommenden Kraftsignale werden in der Steuerung (26) ausgewertet und in ein Steuersignal zur Betätigung der elektrischen Radbremsen (10) umgewandelt.

Die Steuerfunktion wird über das Bremslichtsignal des Zugfahrzeugs (2) ein- und ausgeschaltet. Hierbei kann über einen Signalvergleich auch eine Vorbremsung des Fahrzeuganhängers (5) durchgeführt werden. Das Bremslichtsignal des Zugfahrzeugs (2) spricht bereits bei einem leichten Betätigen des Bremspedals an und schaltet die Steuerung (26) ein. Bei dieser leichten Bremsung sind noch keine signifikante Verzögerung und insbesondere noch kein Auflaufen des Fahrzeuganhängers (5) und keine signifikante Druckkraft an den Dehnungsmessstreifen (24,25) messbar oder die Kraftmesssignale liegen unterhalb einer vorgebbaren Einschaltschwelle. In diesem Fall werden über ein gespeichertes Programm in der Steuerung (26) die elektrischen Radbremsen (10) bereits im Wege der Vorbremsung mit einer einstellbaren Kraft betätigt, so dass der Fahrzeuganhänger (5) vor dem Zugfahrzeug (2) bremst und dadurch das Gespann auf Zug hält. Die Vorbremsung baut Schleuder- und Wankeffekte des Fahrzeuganhängers (5) ab.

Sobald die Kraftmesssignale von den Dehnungsmessstreifen (24,25) im Druckbereich liegen und eine vorgebbare Schwelle überschreiten, wird auf den normalen Bremsmodus geschaltet, wobei die elektrischen Fahrzeugbremsen (10) entsprechend eines vorgegebenen Programms in Abhängigkeit von den Kraftmesssignalen betätigt und in der Stärke gesteuert und geregelt werden. Sobald die Kraftmesssignale wieder unter die genannte Schwelle fallen oder in den Zugbereich wechseln, kann über die Steuerung (26) die Bremswirkung aufgehoben werden. Das gleiche geschieht, sobald der Fahrzeuglenker den Fuß vom Bremspedal nimmt und das Bremslichtsignal erlischt. In diesem Fall kann die Steuerung (26) noch eine gewisse integrierte Nachhaltezeit haben und die elektrischen Radbremsen (10) mit Verzögerung lösen.

Figur 2 bis 6 verdeutlichen die Ausbildung eines Bremskopfes (11), der als Anbauteil für die Erstausrüstung und Nachrüstung von Fahrgestellen (6) bzw. Fahrzeuganhängern (5) und ggf. auch für die Umrüstung von vorhandenen elektrischen Bremseinrichtungen (1) dienen kann. Der Bremskopf (1) besteht aus der Anhängerkupplung (12) mit dem angeschlossenen Rohrstück (16) sowie der Befestigungseinrichtung (19) und der integrierten Steuerung (26). Bei dieser Ausführungsform ist die Steuerung (26) vorzugsweise im Inneren des Rohrstücks (16) und etwa in Höhe der Dehnungsmessstreifen (24,25) untergebracht. Der ganze Bremskopf (11) kann mit der Deichselplatte (18) als komplettes Bauteil auf die Zugdeichsel (7) aufgesetzt und mit dieser durch Schrauben oder dergleichen fest verbunden ist.

Das Anschlusskabel (28) der Stromversorgung (27) ist bereits mit der Steuerung (26) verbunden und wird durch das vordere offene Ende des Rohrstücks (16) heraus und nach unten durch die freie Öffnung des Kupplungsgehäuses (13) herausgeführt. An der Rückseite der Steuerung (26) können die ggf. bereits vorhandenen Steuerleitungen (29) angesteckt werden. Sie können rückseitig aus dem offenen Ende des Rohrstücks (16) und des Klemmteils (20) herausragen. Hier kann ggf. ein entsprechender schützender Deckel vorhanden sein. Die Steuerleitungen (29) können durch Löcher in der Deichselplatte (18) nach unten und zu den Deichselholmen (8) geführt sein, in denen sie dann nach hinten zu den elektrischen Radbremsen (10) verlegt sind. An der Rückseite der Steuerung (26) können auch die Versorgungsleitungen für die Fahrzeugbeleuchtung (nicht dargestellt) angeschlossen sein. Alternativ können die Steuerleitungen bzw. Versorgungsleitungen im Rohrstück (16) oder Klemmteil (20) nach unten heraus und in die Deichselholme (8) geführt sein.

Der Bremskopf (11) kann mit seiner Kraftmessanordnung (23) und seiner Steuerung (26) vorkalibriert sein. Der Anhängerhersteller kann dadurch den Bremskopf anbauen und braucht keine eigene Kalibrierung durchzuführen. Gegebenenfalls kann er noch an der Steuerung (26) eine Einstellung bzw. Auswahl für das tatsächliche zulässige Anhängergewicht vornehmen, falls der Bremskopf (11) für unterschiedliche Gewichte verwendbar ist und entsprechend unterschiedliche Kalibrierungen vorliegen.

Abwandlungen der gezeigten Ausführungsform sind in verschiedener Weise möglich. Zum einen kann die elektrische Bremseinrichtung (1) und insbesondere der Bremskopf (11) auch mit einer anderen Zugdeichsel (7), z.B. einer Einrohrdeichsel verbunden sein. Hierbei kann z.B. das Klemmteil (20) direkt mit dem vorderen Ende der Einrohrdeichsel verbunden sein. Ansonsten kann auch ein anderer entsprechend geeigneter Montagebeschlag (18) verwendet werden. Durch eine entsprechende Beschlaggestaltung sind auch Anpassungen und Befestigungen an beliebigen anderen Formen von starren Deichseln möglich.

In weiterer Abwandlung können am Rohrstück (16) auch an der Ober- und Unterseite alternativ oder zusätzlich Paarungen von Dehnungsmessstreifen angeordnet sein. Hierdurch lassen sich bei entsprechender Messstreifenanordnung auch Querbewegungen des Fahrgestells (6) gegenüber dem Zugfahrzeug (2) aufnehmen. In einer weiteren Variante können die Dehnungsmessstreifen (24,25) auch direkt an den Deichselholmen (8) oder Längsholmen oder an anderer Stelle der starren Deichselanordnung (7) oder des Fahrgestells (6) angeordnet sein, wobei die Deichselholme (8) am vorderen Ende ihrerseits starr mit der Anhängerkupplung (12) verbunden sind. Hierbei sind wechselbelastungsfeste Verbindungen, wie Schweißnähte oder dergleichen vorteilhaft.

### BEZUGSZEICHENLISTE

- 1: elektrische Bremseinrichtung
- 2: Zugfahrzeug
- 3: Zughaken, Kugelhals
- 4: Steckdose
- 5: Fahrzeuganhänger
- 6: Fahrgestell
- 7: Deichselanordnung, Zugdeichsel
- 8: Deichselholm, Längsträger
- 9: Rad
- 10: elektrische Radbremse
- 11: Bremskopf
- 12: Anhängerkupplung
- 13: Kupplungsgehäuse
- 14: Kupplungsmechanik
- 15: Handbremseinrichtung
- 16: Rohrstück
- 17: Bodenteil
- 18: Montagebeschlag, Deichselplatte
- 19: Befestigungseinrichtung
- 20: Klemmteil, Klemmbügel
- 21: Schraubverbindung
- 22: neutrale Phase
- 23: Kraftmessanordnung
- 24: Dehnungsmessstreifen, DMS
- 25: Dehnungsmessstreifen, DMS
- 26.: Steuerung
- 27: Stromversorgung
- 28: Anschlusskabel
- 29: Steuerleitung
- 30: Höcker

## Patentansprüche

1. Elektrische Bremseinrichtung (1) für Fahrzeuganhänger (5) mit einer starren Deichselanordnung (7) und einer Anhängerkupplung (12), wobei die Bremseinrichtung (1) eine an ein Zugfahrzeug (2) anschließbare Stromversorgung (27), elektrische Radbremsen (10) und eine Messeinrichtung sowie eine Steuerung (26) zur Ermittlung der benötigten Bremskräfte aufweist, **dadurch gekennzeichnet, dass** die Messeinrichtung als eine an der starren Deichselanordnung (7) montierbare Kraftmessanordnung (23) ausgebildet ist, welche die axialen in der Deichselanordnung (7) wirkenden Zug- und Druckkräfte bewegungsfrei aufnimmt.

2. Bremseinrichtung nach Anspruch 1, **dadurch gekennzeichnet, dass** die Kraftmessanordnung (23) mehrere elektrische Dehnungsmessstreifen (24,25) aufweist.

3. Bremseinrichtung nach Anspruch 1 oder 2, **dadurch gekennzeichnet, dass** die Dehnungsmessstreifen (24,25) beidseits an einem starren massivwandigen Rohrstück (16) angeordnet ist.

4. Bremseinrichtung nach Anspruch 1, 2 oder 3, **dadurch gekennzeichnet, dass** die Dehnungsmessstreifen (24,25) im Bereich der neutralen Phase (22) des Rohrstücks (16) angeordnet sind.

5. Bremseinrichtung nach Anspruch 1, 2, 3 oder 4, **dadurch gekennzeichnet, dass** das gerade Rohrstück (16) starr mit der Anhängerkupplung (12) verbunden ist.

6. Bremseinrichtung nach Anspruch 5, **dadurch gekennzeichnet, dass** das Rohrstück (16) einstückig an das Kupplungsgehäuse (13) der Anhängerkupplung (12) angeformt ist.

7. Bremseinrichtung nach einem der vorhergehenden Ansprüche, **dadurch gekennzeichnet, dass** das Rohrstück (16) mittels einer Befestigungseinrichtung (19) mit einer Klemm- und Schraubverbindung (21) mit der Deichselanordnung (7) starr verbunden ist.

8. Bremseinrichtung nach einem der vorhergehenden Ansprüche, **dadurch gekennzeichnet, dass** das Rohrstück (16) mit einem außenseitig umgreifenden Klemmteil (20) an einem Montagebeschlag (18), vorzugsweise einer Deichselplatte, befestigt ist.

9. Bremseinrichtung nach einem der vorhergehenden Ansprüche, **dadurch gekennzeichnet, dass** die Dehnungsmessstreifen (24,25) axial im mittleren Bereich zwischen der Anhängerkupplung (12) und dem Klemmteil (20) am Rohrstück (16) angeordnet sind.

10. Bremseinrichtung nach einem der vorhergehenden Ansprüche, **dadurch gekennzeichnet, dass** der Montagebeschlag (18) einen axialen Höcker (30) zur Führung des Rohrstücks (16) aufweist.

11. Bremseinrichtung nach einem der vorhergehenden Ansprüche, **dadurch gekennzeichnet, dass** der Montagebeschlag (18) mit dem vorderen Ende von ein oder mehreren Deichselholmen (8) starr verbunden ist.

12. Bremseinrichtung nach einem der vorhergehenden Ansprüche, **dadurch gekennzeichnet, dass** die Steuerung (26) im Rohrstück (16) angeordnet ist.

13. Bremseinrichtung nach einem der vorhergehenden Ansprüche, **dadurch gekennzeichnet, dass** elektrische Steuerleitungen (29) zu den elektrischen Radbremsen (10) in den Längsholmen des Fahrgestells (6) verlegt sind.

14. Bremseinrichtung nach einem der vorhergehenden Ansprüche, **dadurch gekennzeichnet, dass** die Stromversorgung (27) der elektrischen Bremseinrichtung (1) ein Anschlusskabel (28) mit Kontakten zur Verbindung mit den Leitungen für Bremslicht und Dauerplus des Zugfahrzeugs (2) aufweist.

15. Bremskopf für eine elektrische Bremseinrichtung (1) für Fahrzeuganhänger (5) mit einer starren Deichselanordnung (7), **dadurch gekennzeichnet, dass** der Bremskopf (11) als Anbauteil für die Deichselanordnung (7) ausgebildet ist, wobei der Bremskopf (11)
- eine Anhängerkupplung (12) mit einem Rohrstück (16) und einer Kraftmessanordnung (23), welche die axialen in der Deichselanordnung (7) wirkenden Zug- und Druckkräfte bewegungsfrei aufnimmt,
- eine Steuerung (26) zur Ermittlung der benötigten Bremskräfte und
- eine Stromversorgung (27) aufweist.

16. Bremskopf nach Anspruch 15, **dadurch gekennzeichnet, dass** am Rohrstück (16) Dehnungsmessstreifen (24,25) und ein Montagebeschlag (18) angeordnet sind.

17. Verfahren zum Betätigen einer elektrischen Bremseinrichtung (1) eines Fahrzeuganhängers (5), welcher mit einer starren Deichselanordnung (7) und einer Anhängerkupplung (12) ausgerüstet ist, wobei die Bremseinrichtung (1) eine an ein Zugfahrzeug (2) anschließbare Stromversorgung (27), elektrische Radbremsen (10) und eine Messeinrichtung sowie eine Steuerung (26) zur Ermittlung und Einleitung der benötigten Bremskräfte aufweist, **dadurch gekennzeichnet, dass** die beim Bremsen des Zugfahrzeugs (2) am Fahrzeuganhängers (5) entstehenden Auflaufkräfte an der starren Deichselanordnung (7) als axiale in der Deichselanordnung (7) wirkende Zug- und Druckkräfte bewegungsfrei über Stauchungen oder Dehnungen mittels Dehnungsmesstreifen (24,25) gemessen werden.

## Claims

1. Electrical braking device (1) for vehicle trailers (5) having a rigid drawbar arrangement (7) and a trailer hitch (12), with the braking device (1) having a power supply means (27) which can be connected to a towing vehicle (2), electric wheel brakes (10) and a measuring device, and also a controller (26) for determining the required braking forces, **characterized in that** the measuring device is in the form of a force-measuring arrangement (23) which can be fitted to the rigid drawbar arrangement (7) and records the axial tensile and compressive forces, which act in the drawbar arrangement (7), without movement.

2. Braking device according to Claim 1, **characterized in that** the force-measuring arrangement (23) has a plurality of electrical strain gauges (24, 25).

3. Braking device according to Claim 1 or 2, **characterized in that** the strain gauges (24, 25) are arranged on both sides of a rigid pipe section (16) which has solid walls.

4. Braking device according to Claim 1, 2 or 3, **characterized in that** the strain gauges (24, 25) are arranged in the region of the neutral phase (22) of the pipe section (16).

5. Braking device according to Claim 1, 2, 3 or 4, **characterized in that** the straight pipe section (16) is rigidly connected to the trailer hitch (12).

6. Braking device according to Claim 5, **characterized in that** the pipe section (16) is integrally formed on the hitch housing (13) of the trailer hitch (12).

7. Braking device according to one of the preceding claims, **characterized in that** the pipe section (16) is rigidly connected to the drawbar arrangement (7) by means of an attachment device (19) having a clamp and screw connection (21).

8. Braking device according to one of the preceding claims, **characterized in that** the pipe section (16) is attached to a mounting fitting (18), preferably a drawbar plate, by a clamping part (20) which surrounds the outside of the said pipe section.

9. Braking device according to one of the preceding claims, **characterized in that** the strain gauges (24, 25) are axially arranged on the pipe section (16) in the middle region between the trailer hitch (12) and the clamping part (20).

10. Braking device according to one of the preceding claims, **characterized in that** the mounting fitting (18) has an axial protrusion (30) for guiding the pipe section (16).

11. Braking device according to one of the preceding claims, **characterized in that** the mounting fitting (18) is rigidly connected to the front end of one or more drawbar spars (8),

12. Braking device according to one of the preceding claims, **characterized in that** the controller (26) is arranged in the pipe section (16).

13. Braking device according to one of the preceding claims, **characterized in that** electrical control lines (29) to the electric wheel brakes (10) are laid in the longitudinal spars of the chassis (6).

14. Braking device according to one of the preceding claims, **characterized in that** the power supply means (27) of the electrical braking device (1) has a connection cable (28) with contacts for the purpose of connection to the lines for the brake lights and the continuous positive of the towing vehicle (2).

15. Braking head for an electrical braking device (1) for vehicle trailers (5) having a rigid drawbar arrangement (7), **characterized in that** the braking head (11) is in the form of an add-on part for the drawbar arrangement (7), with the braking head (11) having
- trailer hitch (12) with a pipe section (16) and a force-measuring arrangement (23) which records the axial tensile and compressive forces, which act in the drawbar arrangement (7), without movement,
- a controller (26) for determining the required braking forces, and
- a power supply means (27).

16. Braking head according to Claim 15, **characterized in that** strain gauges (24, 25) and a mounting fitting (18) are arranged on the pipe section (16).

17. Method for operating an electrical braking device (1) of a vehicle trailer (5) which is equipped with a rigid drawbar arrangement (7) and a trailer hitch (12), with the braking device (1) having a power supply means (27) which can be connected to a towing vehicle (2), electric wheel brakes (10) and a measuring device, and also a controller (26) for determining and introducing the required braking forces, **characterized in that** the overrun forces which are produced at the vehicle trailer (5) when the towing vehicle (2) is braked are measured at the rigid drawbar arrangement (7) as axial tensile and compressive forces, which act in the drawbar arrangement (7), without movement by means of compression and expansion using strain gauges (24, 25).

## Revendications

1. Dispositif (1) électrique de freinage de remorque (5) de véhicule, comprenant un dispositif (7) rigide à timon et un accouplement (12) de remorque, dans lequel le dispositif (1) de freinage a une alimentation (27) en courant pouvant être raccordée à un véhicule (2) de traction, un frein (10) électrique de roue et un dispositif de mesure ainsi qu'une commande (26) pour la détermination des forces de freinage qui sont nécessaires, **caractérisé en ce que** le dispositif de mesure est constitué sous la forme d'un dynamomètre (23) qui peut être monté sur le dispositif (7) rigide à timon et qui absorbe sans déplacement les forces de traction et de compression agissant axialement dans le dispositif (7) à timon.

2. Dispositif de freinage suivant la revendication 1, **caractérisé en ce que** le dynamomètre (23) a plusieurs jauges de contrainte (24, 25).

3. Dispositif de freinage suivant la revendication 1 ou 2, **caractérisé en ce que** les jauges de contrainte (24, 25) sont disposées des deux côtés sur un tronçon (16) tubulaire rigide à paroi pleine.

4. Dispositif de freinage suivant la revendication 1, 2 ou 3, **caractérisé en ce que** les jauges de contrainte (24, 25) sont disposées dans la zone de la phase (22) neutre du tronçon (16) tubulaire.

5. Dispositif de freinage suivant la revendication 1, 2, 3 ou 4, **caractérisé en ce que** le tronçon (16) tubulaire droit est assemblé rigidement à l'accouplement (12) de remorque.

6. Dispositif de freinage suivant la revendication 5, **caractérisé en ce que** le tronçon (16) tubulaire est formé d'un seul tenant avec l'enveloppe (13) de l'accouplement (12) de remorque.

7. Dispositif de freinage suivant l'une des revendications précédentes, **caractérisé en ce que** le tronçon (16) tubulaire est assemblé rigidement au dispositif (7) à timon au moyen d'un dispositif (19) de fixation ayant une liaison (21) par serrage et par vissage.

8. Dispositif de freinage suivant l'une des revendications précédentes, **caractérisé en ce que** le tronçon (16) tubulaire est fixé par une pièce (20) de serrage enserrant du côté extérieur à une armature (18) de montage, de préférence une plaque de timon.

9. Dispositif de freinage suivant l'une des revendications précédentes, **caractérisé en ce que** les jauges de contrainte (24, 25) sont disposées axialement dans la zone médiane entre l'accouplement (12) de remorque et la pièce (20) de serrage sur le tronçon (16) tubulaire.

10. Dispositif de freinage suivant l'une des revendications précédentes, **caractérisé en ce que** l'armature (18) de montage a une bosse (30) axiale de guidage du tronçon (16) tubulaire.

11. Dispositif de freinage suivant l'une des revendications précédentes, **caractérisé en ce que** l'armature (18) de montage est assemblée rigidement à l'extrémité avant d'un ou de plusieurs barres (8) de timon.

12. Dispositif de freinage suivant l'une des revendications précédentes, **caractérisé en ce que** la commande (26) est disposée dans le tronçon (16) tubulaire.

13. Dispositif de freinage suivant l'une des revendications précédentes, **caractérisé en ce que** des lignes (29) électriques de commande allant vers les freins (10) électriques de roue sont posées dans les longerons du châssis (6).

14. Dispositif de freinage suivant l'une des revendications précédentes, **caractérisé en ce que** l'alimentation (27) en courant du dispositif (1) électrique de freinage comporte un câble (28) de connexion ayant des contacts de connexion avec les lignes pour les feux stop et le pôle positif du courant continu du véhicule (2) de traction.

15. Tête de frein pour un dispositif (1) électrique de freinage d'une remorque (5) de véhicule comprenant un dispositif (7) rigide à timon, **caractérisé en ce que** la tête (11) de frein est constituée sous la forme d'une pièce d'adjonction au dispositif (7) à timon, la tête (11) de frein ayant :
- un accouplement (12) de remorque ayant un tronçon (16) tubulaire et un dynamomètre (23) qui enregistre sans déplacement les forces de traction et compression agissant axialement dans le dispositif (7) à timon,
- une commande (26) de détermination des forces de freinage nécessaires, et
- une alimentation (27) en courant électrique.

16. Tête de frein selon la revendication 15, **caractérisée en ce que** des zones de contraintes (24, 25) et une armature (18) de montage sont disposées selon le tronçon (16) tubulaire.

17. Procédé d'actionnement d'un dispositif (1) électrique de freinage d'une remorque (5) de véhicule, qui est équipé d'un dispositif (7) rigide à timon et d'un accouplement (12) de remorque, le dispositif (1) de freinage ayant une alimentation (27) en courant pouvant être connectée au véhicule (2) de traction, des freins (10) électriques de roue et un dispositif de mesure ainsi qu'une commande (26) de détermination et d'application des forces de freinage qui sont nécessaires, **caractérisé en ce que** lors du freinage du véhicule (2) de traction on mesure, sans mouvement, par des refoulements ou des allongements au moyen de jauges de contrainte (24, 25) des forces d'inertie produites sur la remorque (5) de véhicule, sur le dispositif (7) rigide à timon, sous la forme de forces de traction et de compression agissant axialement dans le dispositif (7) à timon.
